# EUROPEAN PATENT APPLICATION

(11) **EP 4 750 219 A2**
(43) Date of publication of application: **27.05.2026**
(21) Application number: 26172140.1
(22) Date of filing: 10.01.2023
(51) Int. Cl.: H04W 76/20

(54) **COMMUNICATION METHOD AND USER EQUIPMENT**

(30) Priority: 18.01.2022 JP 2022005614
(62) Divisional of application: 23743139.0
(71) Applicant: Kyocera Corporation, Kyoto-shi, Kyoto 612-8501 (JP)
(72) Inventor: FUJISHIRO, Masato, Kyoto-shi, Kyoto, 612-8501 (JP)
(74) Representative: Viering, Jentschura & Partner mbB Patent- und Rechtsanwälte

(57) **Abstract**

A communication method performed by a UE 100 in a mobile communication system for providing a Multicast Broadcast Service (MBS) includes: receiving, in an RRC idle state or an RRC inactive state, a multicast session from a network; measuring, in a multicast reception state in which the multicast session is being received, reception quality from the network; and performing processing of transitioning to an RRC connected state for multicast reception in response to the measured reception quality being lower than a threshold value.

## Description

### TECHNICAL FIELD

The present disclosure relates to a communication method and a user equipment used in a mobile communication system.

### BACKGROUND

In 3rd Generation Partnership Project (3GPP) standards, technical specifications of New Radio (NR) being radio access technology of the fifth generation (5G) have been defined. NR has features such as high speed, large capacity, high reliability, and low latency, in comparison to Long Term Evolution (LTE) being radio access technology of the fourth generation (4G). In 3GPP, there have been discussions for establishing technical specifications of multicast and broadcast services (MBS) of 5G/NR (for example, see Non-Patent Document 1).

### CITATION LIST

### NON-PATENT LITERATURE

Non-Patent Document 1: 3GPP Contribution: RP-201038, "WID revision: NR Multicast and Broadcast Services"

### SUMMARY

A communication method according to a first aspect is a method performed by a user equipment in a mobile communication system for providing a Multicast Broadcast Service (MBS). The communication method includes: receiving, in an RRC idle state or an RRC inactive state, a multicast session from a network; measuring, in a multicast reception state in which the multicast session is being received, reception quality from the network; and performing processing of transitioning to an RRC connected state for multicast reception in response to the measured reception quality being lower than a threshold value.

A user equipment according to a second aspect is used in a mobile communication system for providing a multicast broadcast service (MBS). The user equipment includes: a receiver configured to receive, in an RRC idle state or an RRC inactive state, a multicast session from a network; and a controller configured to measure, in a multicast reception state in which the multicast session is being received, reception quality from the network. The controller is configured to perform processing of transitioning to an RRC connected state for multicast reception in response to the measured reception quality being lower than a threshold value.

### BRIEF DESCRIPTION OF THE DRAWINGS

FIG. 1 is a diagram illustrating a configuration of a mobile communication system according to an embodiment.
FIG. 2 is a diagram illustrating a configuration of a user equipment (UE) according to an embodiment.
FIG. 3 is a diagram illustrating a configuration of a gNB (base station) according to an embodiment.
FIG. 4 is a diagram illustrating a configuration of a protocol stack of a radio interface of a user plane handling data.
FIG. 5 is a diagram illustrating a configuration of a protocol stack of a radio interface of a control plane handling signaling (control signal).
FIG. 6 is a diagram illustrating an overview of MBS traffic delivery according to an embodiment.
FIG. 7 is a diagram illustrating delivery modes according to an embodiment.
FIG. 8 is a diagram illustrating an example of internal processing related to MBS reception of a UE according to an embodiment.
FIG. 9 is a diagram illustrating another example of internal processing related to the MBS reception of the UE according to an embodiment.
FIG. 10 is a diagram illustrating an operation example of the mobile communication system according to the embodiment.
FIG. 11 is a diagram illustrating a first variation of an operation of the mobile communication system according to the embodiment.
FIG. 12 is a diagram illustrating a second variation of an operation of the mobile communication system according to the embodiment.

### DESCRIPTION OF EMBODIMENTS

5G/NR multicast and broadcast services are desired to provide enhanced services compared to 4G/LTE multicast and broadcast services.

The present disclosure provides an improved multicast broadcast service.

A mobile communication system according to an embodiment is described with reference to the drawings. In the description of the drawings, the same or similar parts are denoted by the same or similar reference signs.

### Configuration of Mobile Communication System

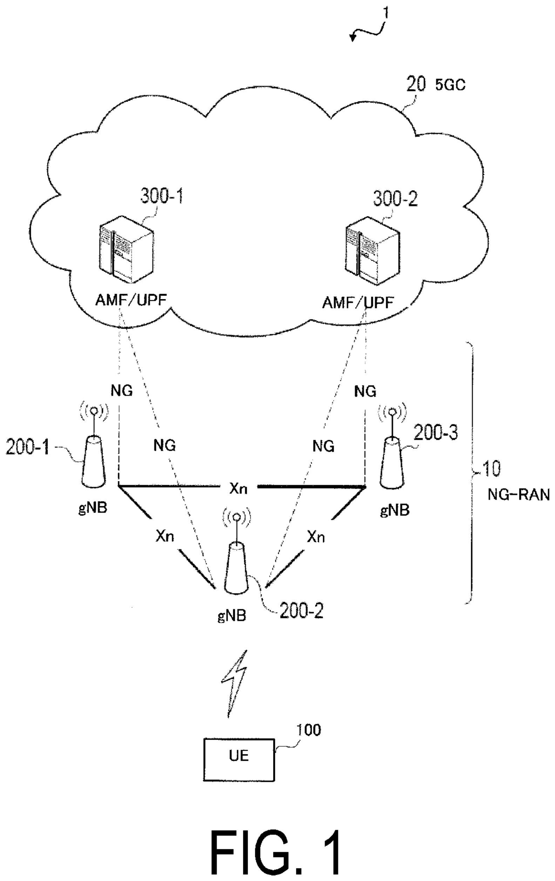

FIG. 1 is a diagram illustrating a configuration of a mobile communication system according to an embodiment. The mobile communication system 1 complies with the 5th Generation System (5GS) of the 3GPP standard. The description below takes the 5GS as an example, but Long Term Evolution (LTE) system may be at least partially applied to the mobile communication system. A sixth generation (6G) system may be at least partially applied to the mobile communication system.

The mobile communication system 1 includes a User Equipment (UE) 100, a 5G radio access network (Next Generation Radio Access Network (NG-RAN)) 10, and a 5G Core Network (5GC) 20. The NG-RAN 10 may be hereinafter simply referred to as a RAN 10. The 5GC 20 may be simply referred to as a core network (CN) 20.

The UE 100 is a mobile wireless communication apparatus. The UE 100 may be any apparatus as long as the UE 100 is used by a user. Examples of the UE 100 include a mobile phone terminal (including a smartphone) or a tablet terminal, a notebook PC, a communication module (including a communication card or a chipset), a sensor or an apparatus provided on a sensor, a vehicle or an apparatus provided on a vehicle (Vehicle UE), and a flying object or an apparatus provided on a flying object (Aerial UE).

The NG-RAN 10 includes base stations (referred to as "gNBs" in the 5G system) 200. The gNBs 200 are interconnected via an Xn interface which is an inter-base station interface. Each gNB 200 manages one or more cells. The gNB 200 performs wireless communication with the UE 100 that has established a connection to the cell of the gNB 200. The gNB 200 has a radio resource management (RRM) function, a function of routing user data (hereinafter simply referred to as "data"), a measurement control function for mobility control and scheduling, and the like. The "cell" is used as a term representing a minimum unit of a wireless communication area. The "cell" is also used as a term representing a function or a resource for performing wireless communication with the UE 100. One cell belongs to one carrier frequency (hereinafter simply referred to as one "frequency").

Note that the gNB can be connected to an Evolved Packet Core (EPC) corresponding to a core network of LTE. An LTE base station can also be connected to the 5GC. The LTE base station and the gNB can be connected via an inter-base station interface.

The 5GC 20 includes an Access and Mobility Management Function (AMF) and a User Plane Function (UPF) 300. The AMF performs various types of mobility controls and the like for the UE 100. The AMF manages mobility of the UE 100 by communicating with the UE 100 by using Non-Access Stratum (NAS) signaling. The UPF controls data transfer. The AMF and UPF are connected to the gNB 200 via an NG interface which is an interface between a base station and the core network.

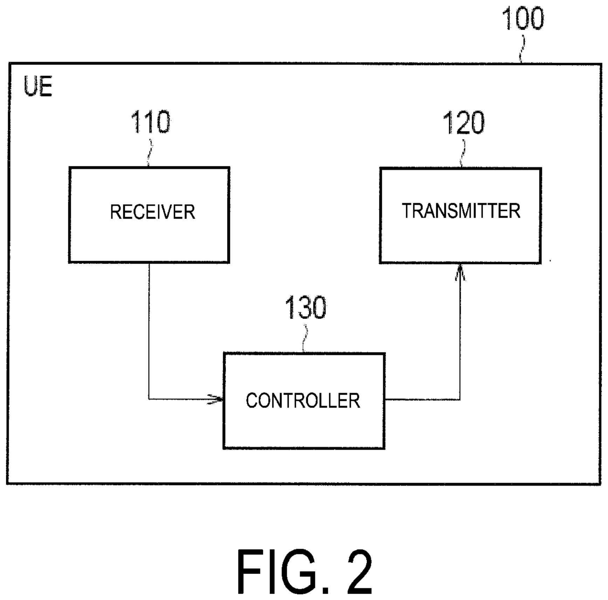

FIG. 2 is a diagram illustrating a configuration of the UE 100 (user equipment) to the embodiment. The UE 100 includes a receiver 110, a transmitter 120, and a controller 130. The receiver 110 and the transmitter 120 constitute a wireless communicator that performs wireless communication with the gNB 200.

The receiver 110 performs various types of reception under control of the controller 130. The receiver 110 includes an antenna and a reception device. The reception device converts a radio signal received through the antenna into a baseband signal (reception signal) and outputs the resulting signal to the controller 130.

The transmitter 120 performs various types of transmission under control of the controller 130. The transmitter 120 includes an antenna and a transmission device. The transmission device converts a baseband signal (transmission signal) output by the controller 130 into a radio signal and transmits the resulting signal through the antenna.

The controller 130 performs various types of control and processes in the UE 100. Such processes include processes of respective layers to be described later. The controller 130 includes at least one processor and at least one memory. The memory stores a program to be executed by the processor and information to be used for processing by the processor. The processor may include a baseband processor and a Central Processing Unit (CPU). The baseband processor performs modulation and demodulation, coding and decoding, and the like of a baseband signal. The CPU executes the program stored in the memory to thereby perform various types of processing.

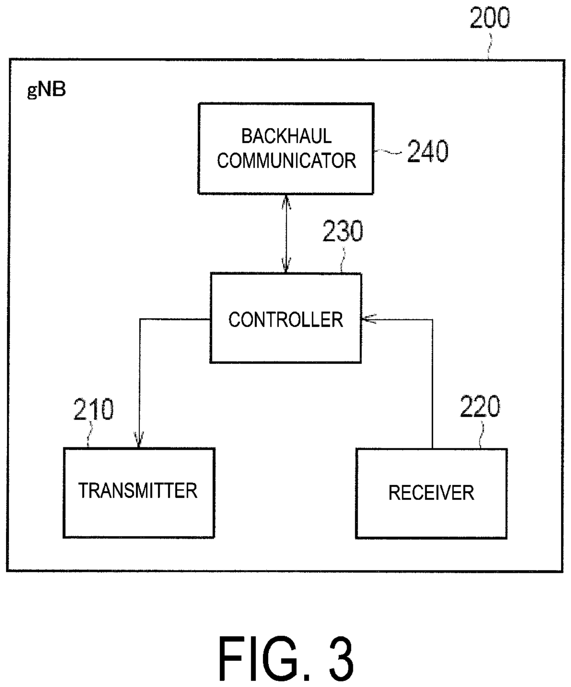

FIG. 3 is a diagram illustrating a configuration of the gNB 200 (base station) according to the embodiment. The gNB 200 includes a transmitter 210, a receiver 220, a controller 230, and a backhaul communicator 240. The transmitter 210 and the receiver 220 constitute a wireless communicator that performs wireless communication with the UE 100. The backhaul communicator 240 constitutes a network communicator that performs communication with the CN 20.

The transmitter 210 performs various types of transmission under control of the controller 230. The transmitter 210 includes an antenna and a transmission device. The transmission device converts a baseband signal (a transmission signal) output by the controller 230 into a radio signal and transmits the resulting signal through the antenna.

The receiver 220 performs various types of reception under control of the controller 230. The receiver 220 includes an antenna and a reception device. The reception device converts a radio signal received through the antenna into a baseband signal (a reception signal) and outputs the resulting signal to the controller 230.

The controller 230 performs various types of control and processes in the gNB 200. Such processes include processes of respective layers to be described later. The controller 230 includes at least one processor and at least one memory. The memory stores a program to be executed by the processor and information to be used for processing by the processor. The processor may include a baseband processor and a CPU. The baseband processor performs modulation and demodulation, coding and decoding, and the like of a baseband signal. The CPU executes the program stored in the memory to thereby perform various types of processing.

The backhaul communicator 240 is connected to a neighboring base station via an Xn interface between base stations. The backhaul communicator 240 is connected to the AMF/UPF 300 via a NG interface between a base station and the core network. Note that the gNB 200 may include a Central Unit (CU) and a Distributed Unit (DU) (i.e., functions are divided), and the two units may be connected via an F1 interface, which is a fronthaul interface.

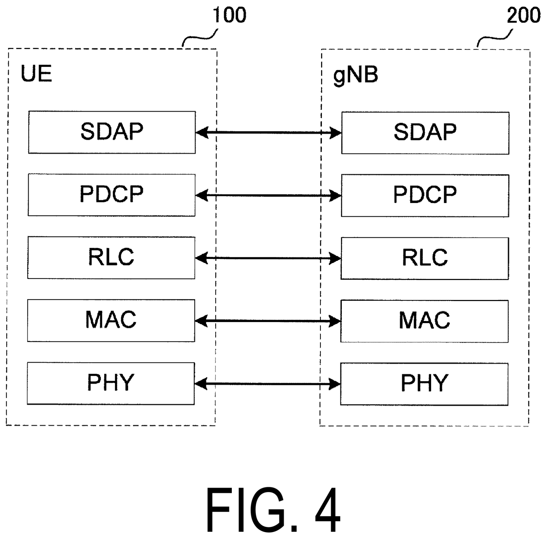

FIG. 4 is a diagram illustrating a configuration of a protocol stack of a radio interface of a user plane handling data.

A radio interface protocol of the user plane includes a physical (PHY) layer, a Medium Access Control (MAC) layer, a Radio Link Control (RLC) layer, a Packet Data Convergence Protocol (PDCP) layer, and a Service Data Adaptation Protocol (SDAP) layer.

The PHY layer performs coding and decoding, modulation and demodulation, antenna mapping and demapping, and resource mapping and demapping. Data and control information are transmitted between the PHY layer of the UE 100 and the PHY layer of the gNB 200 via a physical channel. Note that the PHY layer of the UE 100 receives downlink control information (DCI) transmitted from the gNB 200 over a physical downlink control channel (PDCCH). Specifically, the UE 100 blind decodes the PDCCH using a radio network temporary identifier (RNTI) and acquires successfully decoded DCI as DCI addressed to the UE 100. The DCI transmitted from the gNB 200 is appended with CRC parity bits scrambled by the RNTI.

The MAC layer performs priority control of data, retransmission processing through hybrid ARQ (HARQ: Hybrid Automatic Repeat reQuest), a random access procedure, and the like. Data and control information are transmitted between the MAC layer of the UE 100 and the MAC layer of the gNB 200 via a transport channel. The MAC layer of the gNB 200 includes a scheduler. The scheduler determines transport formats (transport block sizes, Modulation and Coding Schemes (MCSs)) in the uplink and the downlink and resource blocks to be allocated to the UE 100.

The RLC layer transmits data to the RLC layer on the reception side by using functions of the MAC layer and the PHY layer. Data and control information are transmitted between the RLC layer of the UE 100 and the RLC layer of the gNB 200 via a logical channel.

The PDCP layer performs header compression/decompression, encryption/decryption, and the like.

The SDAP layer performs mapping between an IP flow as the unit of Quality of Service (QoS) control performed by a core network and a radio bearer as the unit of QoS control performed by an Access Stratum (AS). Note that, when the RAN is connected to the EPC, the SDAP need not be provided.

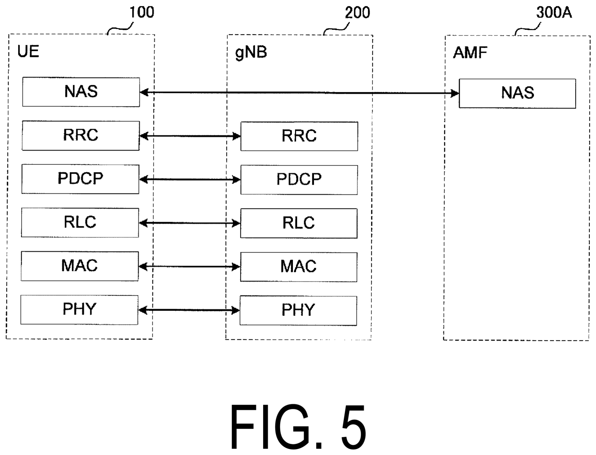

FIG. 5 is a diagram illustrating a configuration of a protocol stack of a radio interface of a control plane handling signaling (a control signal).

The protocol stack of the radio interface of the control plane includes a Radio Resource Control (RRC) layer and a Non-Access Stratum (NAS) layer instead of the SDAP layer illustrated in FIG. 4.

RRC signaling for various configurations is transmitted between the RRC layer of the UE 100 and the RRC layer of the gNB 200. The RRC layer controls a logical channel, a transport channel, and a physical channel according to establishment, re-establishment, and release of a radio bearer. When a connection (RRC connection) between the RRC of the UE 100 and the RRC of the gNB 200 is present, the UE 100 is in an RRC connected state. When no connection (RRC connection) between the RRC of the UE 100 and the RRC of the gNB 200 is present, the UE 100 is in an RRC idle state. When the connection between the RRC of the UE 100 and the RRC of the gNB 200 is suspended, the UE 100 is in an RRC inactive state.

The NAS layer which is positioned upper than the RRC layer performs session management, mobility management, and the like. NAS signaling is transmitted between the NAS layer of the UE 100 and the NAS layer of an AMF 300A. Note that the UE 100 includes an application layer other than the protocol of the radio interface. A layer lower than the NAS layer is referred to as an AS layer.

### Overview of MBS

An overview of the MBS according to the MBS according to an embodiment will be provided embodiment will be provided. The MBS is a service in which the NG-RAN 10 can provide broadcast or multicast, i.e., Point To Multipoint (PTM) data transmission to the UE 100. Assumed use cases (service types) of the MBS include public safety communication, mission critical communication, Vehicle to Everything (V2X) communication, IPv4 or IPv6 multicast delivery, Internet protocol television (IPTV), group communication, and software delivery.

A broadcast service provides a service to every UE 100 within a particular service area for an application not requiring highly reliable QoS. An MBS session used for the broadcast service is referred to as a broadcast session.

A multicast service provides a service not to every UE 100, but to a group of UEs 100 joining the multicast service (multicast session). An MBS session used for the multicast service is referred to as a multicast session. The multicast service can provide the same content to the group of UEs 100 through a method with higher radio efficiency than the broadcast service.

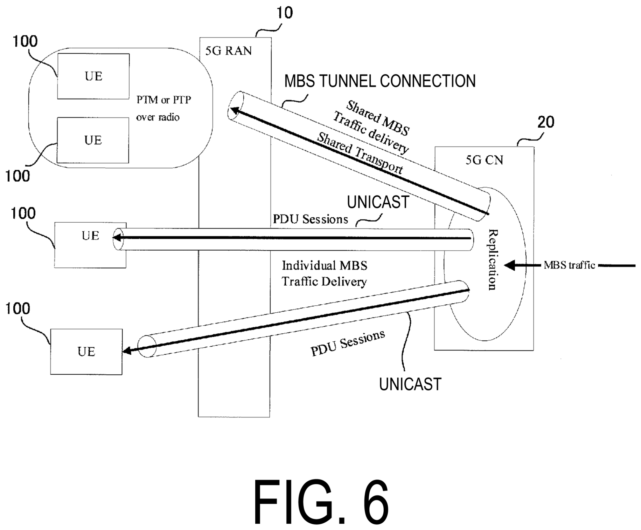

FIG. 6 is a diagram illustrating an overview of MBS traffic delivery according to the embodiment.

MBS traffic (MBS data) is delivered from a single data source (application service provider) to a plurality of UEs. The 5G CN (5GC) 20, which is a 5G core network, receives the MBS data from the application service provider and performs Replication of the MBS data to deliver the resultant.

From the perspective of the 5GC 20, two multicast delivery methods are possible: 5GC Shared MBS Traffic delivery and 5GC Individual MBS Traffic delivery.

In the 5GC individual MBS traffic delivery method, the 5GC 20 receives a single copy of MBS data packets and delivers individual copies of these MBS data packets to the individual UEs 100 via PDU sessions of the individual UEs 100. Thus, one PDU session for each UE 100 needs to be associated with a multicast session.

In the 5GC shared MBS traffic delivery method, the 5GC 20 receives a single copy of MBS data packets and delivers the single copy of the MBS packets to a RAN node (i.e., the gNB 200). The gNB 200 receives the MBS data packets via MBS tunnel connection, and delivers those to one or more UEs 100.

From the perspective of the RAN (5G RAN) 10, two delivery methods are possible for radio transmission of the MBS data in the 5GC shared MBS traffic delivery method: a Point-to-Point (PTP) delivery method and a Point-to-Multipoint (PTM) delivery method. PTP means unicast, and PTM means multicast and broadcast.

In the PTP delivery method, the gNB 200 wirelessly delivers the individual copies of the MBS data packets to the individual UEs 100. On the other hand, in the PTM delivery method, the gNB 200 wirelessly delivers the single copy of the MBS data packets to a group of the UEs 100. The gNB 200 can dynamically determine whether to use the PTM or PTP delivery method as a method for delivering the MBS data to one UE 100.

The PTP and PTM delivery methods are mainly related to the user plane. Modes for controlling the MBS data delivery include two delivery modes: a first delivery mode and a second delivery mode.

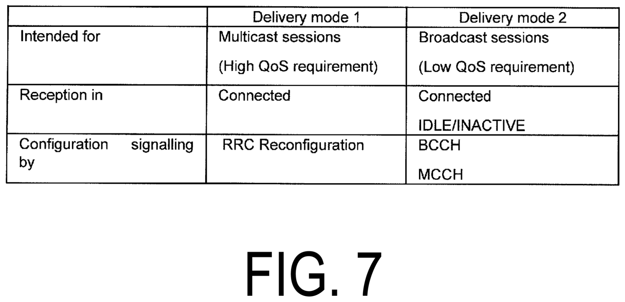

FIG. 7 is a diagram illustrating delivery modes according to the embodiment.

The first delivery mode (Delivery mode 1 (DM1)) is a delivery mode that can be used by the UE 100 in the RRC connected state, and is a delivery mode for high QoS requirements. The first delivery mode is used for multicast sessions among MBS sessions. Note that the first delivery mode may be used for broadcast sessions. The first delivery mode may be available to the UE 100 in the RRC idle state or the RRC inactive state.

MBS reception configuration in the first delivery mode is performed through UE-dedicated signaling. For example, the MBS reception configuration in the first delivery mode is performed through an RRC Reconfiguration message (or an RRC Release message), which is an RRC message unicast from the gNB 200 to the UE 100.

The MBS reception configuration includes MBS traffic channel configuration information (hereinafter referred to as "MTCH configuration information") about configuration of an MBS traffic channel transmitting MBS data. The MTCH configuration information includes MBS session information (including an MBS session identifier described below) relating to an MBS session and scheduling information of the MBS traffic channel corresponding to the MBS session. The scheduling information of an MBS traffic channel may include discontinuous reception (DRX) configuration of the MBS traffic channel. The discontinuous reception configuration may include at least one parameter of a timer value (On Duration Timer) for defining an on-period (On Duration: reception period), a timer value (Inactivity Timer) for extending the on-period, a scheduling interval or a DRX cycle (Scheduling Period, DRX Cycle), an offset value (Start Offset, DRX Cycle Offset) of a start subframe for scheduling or a DRX cycle, a start delay slot value (Slot Offset) of an on-period timer, a timer value (Retransmission Timer) for defining a maximum time until retransmission, and a timer value (HARQ RTT Timer) for defining a minimum interval until DL assignment of HARQ retransmission.

Note that the MBS traffic channel is a type of logical channel and may be referred to as an MTCH. The MBS traffic channel is mapped to a downlink shared channel (Down Link-Shared CHannel (DL-SCH)) being a type of transport channel.

The second delivery mode (Delivery mode 2 (DM2)) is a delivery mode that can be used not only by the UE 100 in the RRC connected state, but also by the UE 100 in the RRC idle state or the RRC inactive state, and is a delivery mode for low QoS requirements. The second delivery mode is used for broadcast sessions among MBS sessions. However, the second delivery mode may also be applicable to multicast sessions.

An MBS reception configuration in the second delivery mode is performed through broadcast signaling. For example, the MBS reception configuration in the second delivery mode is performed using a logical channel transmitted from the gNB 200 to the UE 100 through broadcast, for example, a broadcast control channel (BCCH) and/or a multicast control channel (MCCH). The UE 100 can receive the BCCH and the MCCH, using a dedicated RNTI defined in technical specifications in advance, for example. The RNTI for BCCH reception may be an SI-RNTI, and the RNTI for MCCH reception may be an MCCH-RNTI.

In the second delivery mode, the UE 100 may receive the MBS data in the following three procedures. First, the UE 100 receives MCCH configuration information on a SIB (MBS SIB) transmitted from the gNB 200 on the BCCH. Second, the UE 100 receives the MCCH from the gNB 200, based on the MCCH configuration information. On the MCCH, MTCH configuration information is transmitted. Third, the UE 100 receives the MTCH (MBS data), based on the MTCH configuration information. The MTCH configuration information and/or the MCCH configuration information may be hereinafter referred to as the MBS reception configuration.

In the first delivery mode and the second delivery mode, the UE 100 may receive the MTCH, using a group RNTI (G-RNTI) assigned from the gNB 200. The G-RNTI corresponds to an RNTI for MTCH reception. The G-RNTI may be included in the MBS reception configuration (MTCH configuration information).

The network can provide different MBS services for different MBS sessions. The MBS session is identified by at least one selected from the group consisting of a Temporary Mobile Group Identity (TMGI), a source-specific IP multicast address (which consists of a source unicast IP address, such as an application function and an application server, and an IP multicast address indicating a destination address), a session identifier, and a G-RNTI. At least one selected from the group consisting of the TMGI, the source specific IP multicast address, and the session identifier is referred to as an MBS session identifier. The TMGI, the source-specific IP multicast address, the session identifier, and the G-RNTI are collectively referred to as MBS session information.

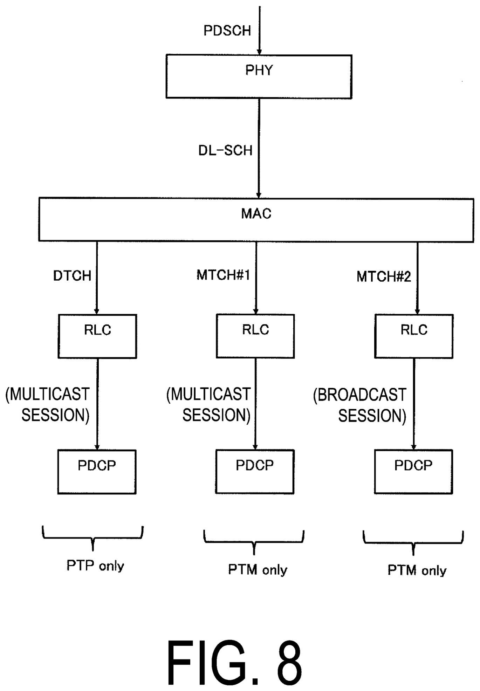

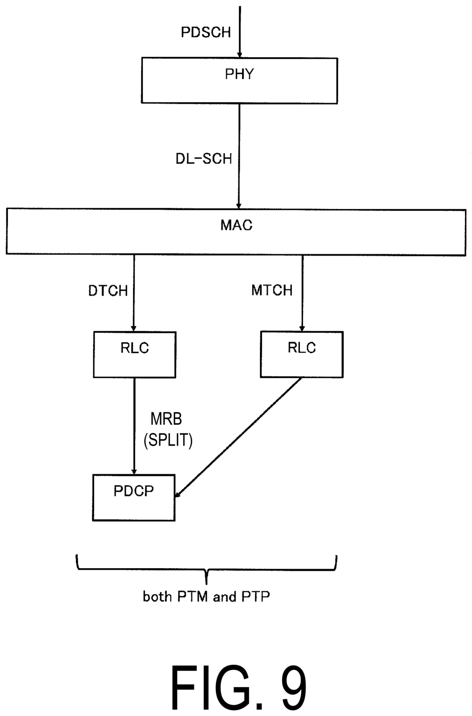

FIG. 8 is a diagram illustrating an example of internal processing related to the MBS reception of the UE 100 according to an embodiment. FIG. 9 is a diagram illustrating another example of the internal processing related to the MBS reception of the UE 100 according to an embodiment.

One MBS radio bearer (MRB) is one radio bearer transmitting a multicast session or a broadcast session. That is, a multicast session may be associated with an MRB or a broadcast session may be associated with an MRB.

The MRB and the corresponding logical channel (e.g., MTCH) are configured for the UE 100 from the gNB 200 through RRC signaling. An MRB configuration procedure may be separated from a data radio bearer (DRB) configuration procedure. In the RRC signaling, one MRB can be configured with "PTM only", "PTP only", or "both PTM and PTP". The type of MRB may be changed by the RRC signaling.

FIG. 8 illustrates an example in which a multicast session and a dedicated traffic channel (DTCH) are associated with an MRB #1, a multicast session and an MTCH #1 are associated with an MRB #2, and a broadcast session and an MTCH #2 are associated with an MRB #3. That is, the MRB #1 is configured with PTP only MRB, the MRB #2 is configured with PTM only MRB, and the MRB #3 is configured with PTM only MRB. Note that the DTCH is scheduled using a cell RNTI (C-RNTI). The MTCH is scheduled using the G-RNTI.

The PHY layer of the UE 100 processes user data (received data) received on the PDSCH, which is one of physical channels, and routes the processed user data to the downlink shared channel (DL-SCH), which is one of transport channels. The MAC layer (MAC entity) of the UE 100 processes the data received on the DL-SCH and routes the received data to a corresponding logical channel (corresponding RLC entity) based on a logical channel identifier (LCID) included in the header (MAC header) included in the received data.

FIG. 9 illustrates an example in which the DTCH and the MTCH are associated with the MRB associated with the multicast session. Specifically, one MRB is split into two legs, one leg is associated with the DTCH, and the other leg is associated with the MTCH. The two legs are combined at the PDCP layer (PDCP entity). That is, the MRB is an MRB configured with both PTM and PTP. Such an MRB may be referred to as a split MRB.

### Operation of Mobile Communication System

An operation of the mobile communication system 1 according to the embodiment will be described. Hereinafter, a case is mainly assumed where multicast delivery is performed in the above-described first delivery mode (DMl). As described above, the first delivery mode is a delivery mode that can be used by the UE 100 in the RRC connected state, and is a delivery mode for high QoS requirements.

In the embodiment, it is assumed that the UE 100 in the RRC idle state or the RRC inactive state receives a multicast session (i.e., multicast reception). For example, after starting multicast delivery to the UE 100 in the RRC connected state, the gNB 200 continues multicast delivery while causing the UE 100 to transition to the RRC idle state or the RRC inactive state in response to the load on the gNB 200 increasing. After starting multicast reception in the RRC connected state, the UE 100 continues multicast reception in the RRC idle state or the RRC inactive state.

Since the first delivery mode (DM1) may be required to ensure the high QoS requirements, the UE 100 in the RRC idle state or the RRC inactive state may also be required to ensure the high QoS requirements. Although the QoS is satisfied if the UE 100 is maintained in the RRC connected state, the network side greatly consumes resources, and the UE 100 side greatly consumes power. Although such a problem is solved by causing the UE 100 to transition to the RRC idle state or the RRC inactive state, there is a probability that the QoS is not satisfied. Hence, in the embodiment, the UE 100 that performs multicast reception in the RRC idle state or the RRC inactive state enables transition to the RRC connected state in response to deterioration of reception quality of multicast reception.

Firstly, the UE 100 according to the embodiment receives, in the RRC idle state or the RRC inactive state, the multicast session from the network (gNB 200). Secondly, the UE 100 measures, in a multicast reception state in which the multicast session is being received, reception quality (hereinafter, also referred to as "multicast reception quality") from the network. Thirdly, the UE 100 performs processing of transitioning to the RRC connected state for multicast reception in response to the measured reception quality being lower than a threshold value. Thus, by transitioning to the RRC connected state and continuing multicast reception, QoS required for multicast reception can be easily ensured.

When the multicast reception quality is higher than the threshold value, the UE 100 does not transition to the RRC connected state for multicast reception. That is, when the multicast reception quality is higher than the threshold value, the UE 100 is forbidden from transitioning to the RRC connected state for multicast reception. Thus, the RRC idle state or the RRC inactive state can be maintained, so that the load on the network side can be reduced.

The UE 100 may receive configuration information for configuring the threshold value from the network (gNB 200). The UE 100 may compare the measured reception quality with threshold value configured in accordance with the configuration information. In this way, the threshold value at which the UE 100 starts the processing of transitioning to the RRC connected state may be configured for the UE 100 from the network (gNB 200). Thus, the UE 100 can be caused to transition to the RRC connected state under the management of the network.

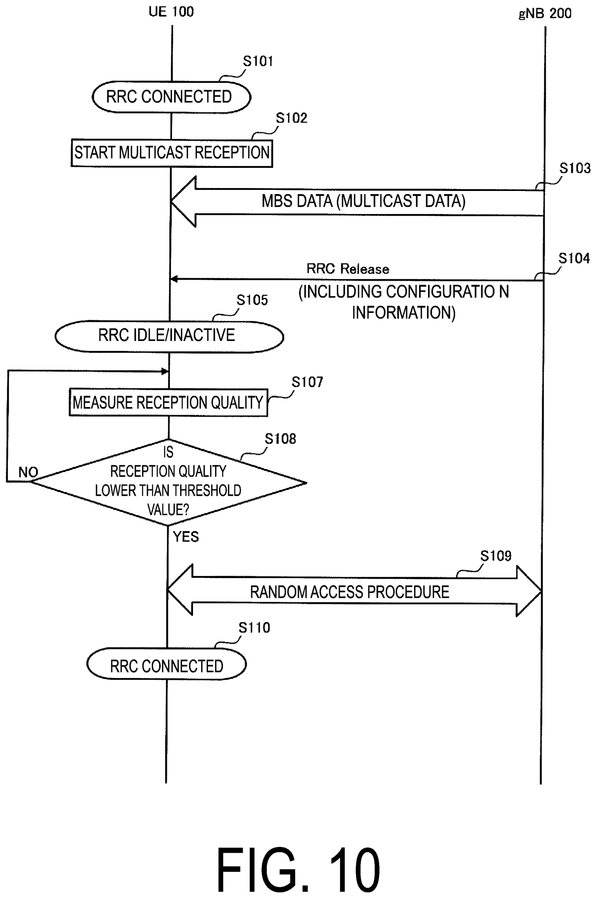

FIG. 10 is a diagram illustrating the operation example of the mobile communication system 1 according to the embodiment.

In step S101, the UE 100 is in the RRC connected state in a cell of the gNB 200. It is assumed that the UE 100 is interested in a certain multicast session (hereinafter referred to as a "target multicast session"). "Being interested in a multicast session" means that an upper layer of the UE 100 requests or desires to receive the multicast session. The upper layer includes an NAS layer. The upper layer may further include an application. The UE 100 (NAS entity) performs, on the network, a multicast session join procedure for joining the target multicast session. For example, the UE 100 has joined the target multicast session by transmitting a first NAS message requesting joining the target multicast session to an AMF 300A and receiving a second NAS message approving joining the target multicast session from the AMF 300A. For example, the first NAS message may be a PDU Session Modification Request, and the message may include an MBS session identifier and information for the join request. When the MRB configuration from the gNB 200 is used to implicitly notify the approval of the first NAS message, the second NAS message may be omitted. "Joining the target multicast session" means to register the UE 100 in a CN apparatus as a member of a UE group (multicast group) that receives the multicast session. The CN apparatus may authenticate the UE 100 at the time of registration. The CN apparatus may allow the UE 100 to receive the multicast session. Note that the multicast session may be joined while the multicast session is in a valid state (the multicast session is being transmitted) or in an invalid state (while the start of transmission is waited for, or transmission is interrupted).

In step S102, the UE 100 in the RRC connected state starts receiving the target multicast session. Before this multicast reception, the gNB 200 may configure a multicast reception configuration for target multicast session reception for the UE 100. The multicast reception configuration may be made by using, for example, an RRC Reconfiguration message including an MRB configuration.

In step S103, the UE 100 in the RRC connected state receives the target multicast session reception. More specifically, the UE 100 receives MBS data belonging to the target multicast session from the gNB 200.

Subsequently, in step S104, the gNB 200 determines to cause the UE 100 to transition to the RRC idle state or the RRC inactive state, and transmits to the UE 100 an RRC Release message for causing the UE 100 to transition to the RRC idle state or the RRC inactive state. The gNB 200 may cause the UE 100 to transition to the RRC idle state or the RRC inactive state in response to the load (e.g., resource load) on the gNB 200 increasing. By causing the UE 100 to transition to the RRC idle state or the RRC inactive state, the load on the gNB 200 is reduced.

In the embodiment, the gNB 200 transmits to the UE 100 the RRC Release message including configuration information for configuring the above-described threshold value. The threshold value may be a radio quality threshold value such as a threshold value of Reference Signal Received Power (RSRP), a threshold value of Reference Signal Received Quality (RSRQ), and/or a threshold value of a Signal-to-Interference-plus-Noise Ratio (SINR). The threshold value may be a demodulation quality threshold value such as a threshold value of a Bit Error Rate (BER), a threshold value of a Block Error Rate (BLER), and/or a threshold value of a Packet Error Rate (PER). The threshold value may be configured per multicast session. That is, the threshold value may be configured in association with the MRB configuration (MRB ID) or the multicast session ID (TMGI). Thus, when the UE 100 receives multiple multicast sessions, the UE 100 may maintain multiple threshold values associated with the multiple multicast sessions. The gNB 200 may transmit to the UE 100 the RRC Release message including the configuration information for configuring a duration (first predetermined amount of time) of a threshold value condition. By including these pieces of configuration information in the RRC Release message, UE-specific configuration information can be efficiently transmitted to the UE 100. Such a configuration may be transmitted by RRC Reconfiguration in step S102. When the configuration is included in the RRC Reconfiguration, the UE 100 may determine that the multicast session can be received (reception is permitted) in the RRC idle or inactive state.

In step S105, the UE 100 having received the RRC Release message transitions to the RRC idle state or the RRC inactive state. The UE 100 continues multicast reception in the RRC idle state or the RRC inactive state by using the multicast reception configuration configured in the RRC connected state.

In step S107, the UE 100 receives the multicast reception quality associated with the threshold value configured by the gNB 200. For example, the UE 100 may measure radio quality such as the RSRP, the RSRQ, and/or the SINR. The UE 100 may measure demodulation quality such as the BER, the BLER, and/or the PER.

In step S108, the UE 100 compares the multicast reception quality measured in step S107 with the threshold value configured by the gNB 200. When the measured multicast reception quality is higher than the threshold value (step S108: NO), the UE 100 returns the processing to step S107. In this case, the UE 100 performs multicast reception while maintaining the RRC idle state or the RRC inactive state.

On the other hand, when the measured multicast reception quality is lower than the threshold value (step S108: YES), the UE 100 starts the processing of transitioning to the RRC connected state, that is, a random access procedure for the gNB 200 in step S109.

Note that the case where the multicast reception quality is lower than the threshold value may be a case where the radio quality (the RSRP, the RSRQ, and/or the SINR) is lower than the threshold value. When the multicast reception quality is lower than the threshold value, an error rate (the BER, the BLER, and/or the PER) corresponding to the demodulation quality may be higher than the threshold value.

In step S108, the UE 100 may determine whether the state in which the multicast reception quality is lower than the threshold value has continued for the first predetermined amount of time. The first predetermined amount of time may be configured for the UE 100 in accordance with the configuration information from the gNB 200. When the state in which the multicast reception quality is lower than the threshold value continues for the first predetermined amount of time, the UE 100 may start the processing of transitioning to the RRC connected state, that is, the random access procedure for the gNB 200 (step S109). Thus, an influence of instantaneous deterioration of multicast reception quality is readily eliminated.

In step S109, the UE 100 performs the random access procedure. In a case of the RRC inactive state, the AS layer of the UE 100 may start RRC Resume. On the other hand, in a case of the RRC idle state, the AS layer of the UE 100 may start RRC setup. The AS layer of the UE 100 may notify the NAS layer that the threshold value condition has been satisfied. The NAS layer may instruct the AS layer to transition to the RRC connected state based on the notification.

The UE 100 transitions to the RRC connected state by performing the random access procedure in step S109. The UE 100 that has transitioned to the RRC connected state continues multicast reception. Note that, since the gNB 200 can individually schedule the UE 100 in the RRC connected state, while a high-quality service can be provided to the UE 100, the load on the gNB 200 is high.

Note that, when a predetermined event other than multicast reception occurs during a period during which the UE 100 is in the RRC idle state or the RRC inactive state, the UE 100 may be permitted to transition to the RRC connected state regardless of the above. The predetermined event may be that a Paging from the network has been received, that is, Mobile Terminated (MT) traffic has occurred. The predetermined event may be that uplink transmission has become necessary, that is, Mobile Originated (MO) traffic has occurred.

The above-described embodiment has described the example where the threshold value is configured from the gNB 200 for the UE 100. However, the threshold value may be configured for the UE 100 in advance. The UE 100 may maintain the threshold value configured in advance per QoS level (5QI). The UE 100 may compare the threshold value matching the QoS level of a target multicast session and configured in advance with the multicast reception quality.

### First Variation

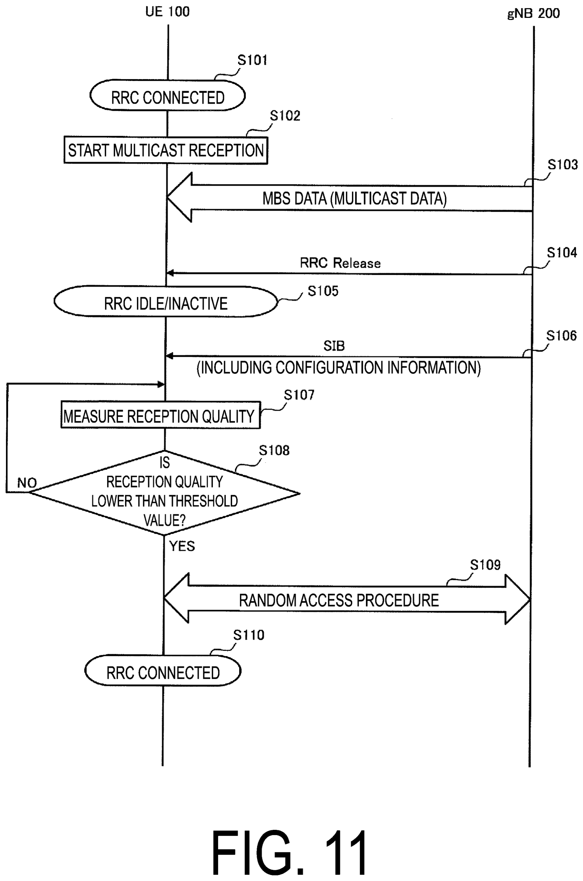

As illustrated in FIG. 11, the gNB 200 may include the above-described configuration information in the System Information Block (SIB) to broadcast (step S106). The UE 100 in the RRC idle state or the RRC inactive state may receive the SIB including the configuration information from the gNB 200, and apply the threshold value (and the first predetermined amount of time) in accordance with the received configuration information. This SIB may include individual configuration information on each bearer (MRB) (or each service) or on each QoS level (5QI). This SIB may include configuration information common to all bearers.

For example, the SIB may include a plurality of sets of a bearer identifier or a 5QI and configuration information associated with the bearer identifier or the 5QI. The UE 100 that has received the SIB may acquire configuration information matching a bearer or a QoS level of the target multicast session from the SIB, and apply the threshold value (and the first predetermined amount of time) in accordance with the acquired configuration information.

### Second Variation

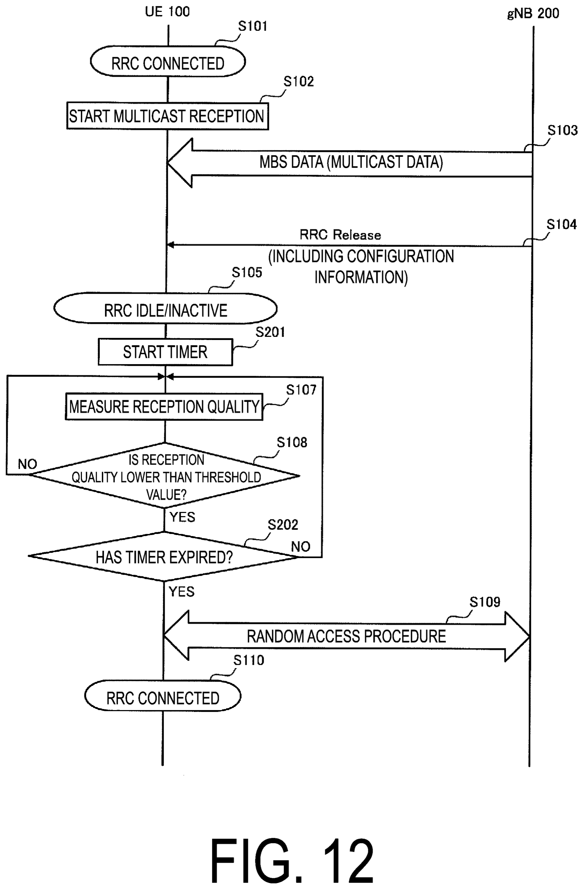

As illustrated in FIG. 12, the UE 100 may be forbidden from transitioning to the RRC connected state for multicast reception until a predetermined amount of time (second predetermined amount of time) elapses after transitioning to the RRC idle state or the RRC inactive state. Thus, the UE 100 can be suppressed from transitioning to the RRC connected state immediately after transitioning to the RRC idle state or the RRC inactive state. The second predetermined amount of time may be configured from the gNB 200 for the UE 100 in accordance with the RRC Release message or the SIB. The RRC Release message or the SIB may include configuration information for configuring the second predetermined amount of time. Thus, the gNB 200 can configure the appropriate second predetermined amount of time in accordance with, for example, a load status of the gNB 200.

In step S201, the UE 100 having transitioned to the RRC idle state or the RRC inactive state starts a timer to which the second predetermined amount of time (timer value) has been set. That is, the UE 100 counts an elapsed period passed after transitioning to the RRC idle state or the RRC inactive state. The second predetermined amount of time (timer value) may be configured from, for example, the gNB 200, and designated as seconds, subframes, radio frames, or a time.

Until the elapsed period passed after the UE 100 transitions to the RRC idle state or the RRC inactive state exceeds the second predetermined amount of time, the UE 100 avoid performing processing (random access procedure) of transitioning to the RRC connected state for multicast reception. When a predetermined event other than the multicast reception occurs, the UE 100 may be permitted to transition to the RRC connected state regardless of the above. The predetermined event may be that a Paging from the network has been received, that is, Mobile Terminated (MT) traffic has occurred. The predetermined event may be that uplink transmission has become necessary, that is, Mobile Originated (MO) traffic has occurred.

After determining that the reception quality is lower than the threshold value (step S108: YES), in step S202, the UE 100 determines whether the timer started in step S201 has expired, that is, whether the elapsed period passed after transitioning to the RRC idle state or the RRC inactive state exceeds the second predetermined amount of time. If the timer has not expired (step S202: NO), the UE 100 returns the processing to step S107. On the other hand, if the timer has expired (step S202: YES), in step S109, the UE 100 starts processing of transitioning to the RRC connected state, that is, the random access procedure for the gNB 200. In this way, the UE 100 performs the processing of transitioning to the RRC connected state in response to the elapsed period passed after transitioning to the RRC idle state or the RRC inactive state exceeding the second predetermined amount of time and the measured reception quality (multicast reception quality) being lower than the threshold value.

### Other Embodiments

The operation flows described above can be separately and independently implemented, and also be implemented in combination of two or more of the operation flows. For example, some steps of one operation flow may be added to another operation flow or some steps of one operation flow may be replaced with some steps of another operation flow.

In the embodiments and examples described above, an example in which the base station is an NR base station (i.e., a gNB) is described; however, the base station may be an LTE base station (i.e., an eNB) or a 6G base station. The base station may be a relay node such as an Integrated Access and Backhaul (IAB) node. The base station may be a DU of the IAB node. The UE 100 may be a Mobile Termination (MT) of the IAB node.

A program causing a computer to execute each of the processes performed by the UE 100 or the gNB 200 may be provided. The program may be recorded in a computer readable medium. Use of the computer readable medium enables the program to be installed on a computer. Here, the computer readable medium on which the program is recorded may be a non-transitory recording medium. The non-transitory recording medium is not particularly limited, and may be, for example, a recording medium such as a CD-ROM or a DVD-ROM. Circuits for executing processing performed by the UE 100 or the gNB 200 may be integrated, and at least a part of the UE 100 or the gNB 200 may be implemented as a semiconductor integrated circuit (chipset, System on a chip (SoC)).

The phrases "based on" and "depending on" used in the present disclosure do not mean "based only on" and "only depending on," unless specifically stated otherwise. The phrase "based on" means both "based only on" and "based at least in part on". Similarly, the phrase "depending on" means both "only depending on" and "at least partially depending on". "Obtain" or "acquire" may mean to obtain information from stored information, may mean to obtain information from information received from another node, or may mean to obtain information by generating the information. The terms "include", "comprise" and variations thereof do not mean "include only items stated" but instead mean "may include only items stated" or "may include not only the items stated but also other items". The term "or" used in the present disclosure is not intended to be "exclusive or". Further, any references to elements using designations such as "first" and "second" as used in the present disclosure do not generally limit the quantity or order of those elements. These designations may be used herein as a convenient method of distinguishing between two or more elements. Thus, a reference to first and second elements does not mean that only two elements may be employed there or that the first element needs to precede the second element in some manner. For example, when the English articles such as "a," "an," and "the" are added in the present disclosure through translation, these articles include the plural unless clearly indicated otherwise in context.

Embodiments have been described above in detail with reference to the drawings, but specific configurations are not limited to those described above, and various design variation can be made without departing from the gist of the present disclosure.

Further embodiments are described in the following.

### Embodiment 1.

A communication method performed by a user equipment in a mobile communication system for providing a Multicast Broadcast Service (MBS), the communication method comprising the steps of:
receiving, in an RRC idle state or an RRC inactive state, a multicast session from a network;
measuring, in a multicast reception state in which the multicast session is being received, reception quality from the network; and
performing processing of transitioning to an RRC connected state for multicast reception in response to the measured reception quality being lower than a threshold value.

### Embodiment 2.

The communication method according to embodiment 1, further comprising the steps of:
receiving configuration information configuring the threshold value from a base station comprised in the network; and
comparing the measured reception quality with the threshold value configured in accordance with the configuration information.

### Embodiment 3.

The communication method according to embodiment 1 or 2, further comprising performing the multicast reception while maintaining the RRC idle state or the RRC inactive state in response to the measured reception quality being higher than the threshold value.

### Embodiment 4.

The communication method according to embodiment 1, wherein the performing of the processing of transitioning comprises performing the processing of transitioning in response to a state in which the measured reception quality is lower than the threshold value continues for a first predetermined period of time.

### Embodiment 5.

The communication method according to embodiment 4, further comprising receiving, from the base station included in the network, configuration information configuring the first predetermined amount of time.

### Embodiment 6.

The communication method according to embodiment 1, further comprising the steps of:
counting an elapsed period after transitioning to the RRC idle state or the RRC inactive state; and
avoiding the performing of the processing of transitioning for the multicast reception until the elapsed period exceeds a second predetermined amount of time,
wherein the performing of the processing of transitioning comprises performing the processing of transitioning in response to the elapsed period exceeding the second predetermined amount of time and the measured reception quality being lower than the threshold value.

### Embodiment 7.

The communication method according to embodiment 6, further comprising receiving, from a base station included in the network, configuration information configuring the second predetermined amount of time.

### Embodiment 8.

The communication method according to embodiment 2, 5, or 7, wherein the receiving of the configuration information comprises receiving, from the base station, an RRC Release message comprising the configuration information.

### Embodiment 9.

The communication method according to embodiment 2, 5, or 7, wherein the receiving of the configuration information comprises receiving, from the base station, a system information block comprising the configuration information.

### Embodiment 10.

A user equipment used in a mobile communication system for providing a Multicast Broadcast Service (MBS), the user equipment comprising:
a receiver configured to receive, in an RRC idle state or an RRC inactive state, a multicast session from a network; and
a controller configured to measure, in a multicast reception state in which the multicast session is being received, reception quality from the network,
wherein the controller is configured to perform processing of transitioning to an RRC connected state for multicast reception in response to the measured reception quality being lower than a threshold value.

The present application claims priority to Japanese Patent Application No. 2022-005614 (filed on January 18, 2022), the contents of which are incorporated herein by reference in their entirety.

### REFERENCE SIGNS

1: Mobile communication system
10: RAN
20: CN
100: UE
110: Receiver
120: Transmitter
130: Controller
200: gNB
210: Transmitter
220: Receiver
230: Controller
240: Backhaul communicator

## Claims

1. A communication method performed by a network node (200) in a mobile communication system (1) for providing a Multicast Broadcast Service, MBS, the communication method comprising the steps of:
transmitting, to a user equipment (100), a message including a threshold value and information associating the threshold value with a multicast session; and
transmitting, to the user equipment (100) in a Radio Resource Control, RRC, inactive state, the multicast session; wherein
the threshold value is used for a process for transitioning from the RRC inactive state to an RRC connected state in the user equipment (100) receiving the multicast session.

2. The communication method according to claim 1, wherein
the message is an RRC release message which is for transitioning the user equipment (100) from the RRC connected state to the RRC inactive state.

3. A network node (200) in a mobile communication system (1) for providing a Multicast Broadcast Service, MBS, the network node (200) comprising:
a transmitter (210) configured to:
transmit, to a user equipment (100), a message including a threshold value and information associating the threshold value with a multicast session;
transmit, to the user equipment (100) in a Radio Resource Control, RRC, inactive state, the multicast session; wherein
the threshold value is used for a process for transitioning from the RRC inactive state to an RRC connected state in the user equipment (100) receiving the multicast session.

4. A chipset comprising means for carrying out the method of claim 1.

5. A non-transitory computer-readable medium comprising, stored thereupon, computer program instructions for execution by the network node (200), the program instructions being configured to cause the network node (200) to carry out the communication method of claim 1.

6. A mobile communication system (1) for providing a Multicast Broadcast Service, MBS, the mobile communication system comprising:
a network node (200) configured to:
transmit, to a user equipment (100), a message including a threshold value and information associating the threshold value with a multicast session;
transmit, to the user equipment (100) in a Radio Resource Control, RRC, inactive state, the multicast session; wherein
the threshold value is used for a process for transitioning from the RRC inactive state to an RRC connected state in the user equipment (100) receiving the multicast session.
